Europäisches Patentamt

European Patent Office

Office européen des brevets

(11) Numéro de publication: **0 494 123 B1**

(12) **FASCICULE DE BREVET EUROPEEN**

(45) Date de publication de fascicule du brevet: **12.07.95**  (51) Int. Cl.6: **C04B 35/65**, C04B 35/66

(21) Numéro de dépôt: **92400003.7**

(22) Date de dépôt: **02.01.92**

(54) **Procédé de formation d'une masse réfractaire et composition d'un mélange de particules pour la mise en oeuvre d'un tel procédé.**

(30) Priorité: **02.01.91 FR 9100018**

(43) Date de publication de la demande:
**08.07.92 Bulletin 92/28**

(45) Mention de la délivrance du brevet:
**12.07.95 Bulletin 95/28**

(84) Etats contractants désignés:
**AT BE CH DE DK ES FR GB GR IT LI LU NL PT SE**

(56) Documents cités:
**GB-A- 2 170 191
GB-A- 2 213 812
LU-A- 81 808**

**WORLD PATENTS INDEX LATEST Week 8626, Derwent Publications Ltd., London, GB; AN 86-165116 & JP-A-61097161**

(73) Titulaire: **SOLLAC
Immeuble Elysées-La Défense, 29 Le Parvis
F-92800 Puteaux (FR)**

(72) Inventeur: **Bovi, Roger
305 Chemin fontaine de guigue
F-13270 Fos-Sur-Mer (FR)**
Inventeur: **Bizzari, Jean-Pierre
161 rue de Rome
F-13006 Marseille (FR)**

(74) Mandataire: **Lanceplaine, Jean-Claude et al
CABINET LAVOIX
2, Place d'Estienne d'Orves
F-75441 Paris Cédex 09 (FR)**

Rank Xerox (UK) Business Services
(3.10/3.09/3.3.3)

# Description

La présente invention a pour objet un procédé de formation d'une masse réfractaire par projection sur une surface d'un mélange de particules réfractaires et de particules oxydables, partiellement fondues, ainsi qu'une composition d'un mélange de particules pour la mise en oeuvre d'un tel procédé.

Ce genre de procédé est utilisé par exemple pour le rebouchage à chaud de fissures dans les parois de four à coke ou dans d'autres parois réfractaires.

On connait dans le FR-A-2 066 355, un procédé de formation d'une masse réfractaire dans lequel on projette contre une surface par une lance avec apport d'oxygène, des particules d'au moins une substance oxydable qui brûlent avec dégagement de chaleur en se combinant avec l'oxygène, ainsi que des particules d'au moins une autre substance.

Les particules oxydables et les autres particules ont une composition telle qu'en présence de la chaleur de combustion, une masse cohérente réfractaire se forme contre la surface à revêtir.

La dimension moyenne des particules est de moins de 500 microns et le mélange des particules oxydables et des autres particules est tel que la proportion en poids de particules oxydables est de 20 à 30%.

Dans le FR-A-2 066 355 plusieurs exemples de particules utilisées sont donnés, et les particules oxydables peuvent être du silicium en grains, de l'aluminium en grains ou en paillettes, du magnésium ou du zirconium.

D'autres substances oxydables peuvent être utilisées comme par exemple le calcium, le manganèse et le fer.

Les autres particules, dites paticules réfractaires, sont de préférence des particules d'oxyde d'un métal ou d'un métalloïde comme par exemple $Al_2O_3$, $MgO$, $Sio_2$, $ZrSiO_4$ ainsi que des spinelles $Al_2O_3$ et $MgO$ ou $Al_2O_3$ et $Cr_2O_3$.

L'inconvénient des compositions utilisées dans les exemples donnés dans le FR-A-2 066 355 est que les particules de moins de 500 microns, lorsqu'elles se combinent avec l'oxygène, brûlent ou fondent en étant soufflées.

Par conséquent, il se forme à la sortie de la lance, une projection de grains de particules soufflées, c'est à dire éclatées ayant l'aspect de maïs soufflé.

Ces particles forment alors sur la surface sur laquelle elles sont projetées, une mousse poreuse ayant peu de résistance à l'abrasion.

Ainsi, une réparation de fissures réalisé au moyen d'un mélange de particules ayant une dimension moyenne inférieure à 500 microns ne tient pas longtemps et ces fissures se reforment.

De plus, on assiste à une consommation importante de produits, car les particules soufflées sont très légères et s'envolent avant d'arriver sur la surface à revêtir si bien que le rendement atteint à peine 70%.

En revanche, si les particules sont trop grosses, les grains projetés sont trop lourds et n'acquièrent pas l'énergie suffisante pour atteindre la surface sur laquelle ils sont projetés.

Par conséquent, certains grains tombent sur le sol avant d'arriver sur la surface.

De plus, étant donné leur taille et leur poids importants, une partie des grains ayant atteint la surface à réparer, n'y adhère pas, mais glisse le long de ladite surface jusqu'à tomber sur le sol.

Le rendement avec des grains de particules trop gros est également de l'ordre de 70%.

La présente invention a pour but de proposer un procédé de formation d'une masse réfractaire sur une surface et une composition d'un mélange de particules dont la répartition est telle qu'elle permet de s'affranchir de ces inconvénients.

La présente invention a donc pour objet un procédé de formation d'une masse réfractaire sur une surface et une composition d'un mélange de particules dont la répartition est telle qu'elle permet de s'affranchir de ces inconvénients.

La présente invention a donc pour objet un procédé de formation d'une masse réfractaire sur une surface, dans lequel on projette un mélange de particules réfractaires et de particules oxydables partiellement fondues, caractérisé en ce que le facteur de répartition granulométrique des fractions passantes à 80% et à 20% des particules réfractaires et des particules oxydables est inférieur à 0,8.

Selon d'autres caractéristiques de l'invention :

- la fraction passante à 80% des particules oxydables et des particules réfractaires est inférieure à 2mm,
- la fraction passante à 80% des particules oxydables et des particules réfractaires est inférieure à 1,2 mm,
- la fraction passante à 20% des particules oxydables et des particules réfractaires est inférieure à 500 microns,
- la fraction passante à 100% des particules oxydables et des particules réfractaires est inférieure à 2,5 mm.

La présente invention a également pour objet une composition d'un mélange de particules réfractaires et de particules oxydables destiné à être projeté sur une surface pour former une masse réfractaire, caractérisé en ce que le facteur de répartion granulométrique des fractions passantes à 80% et à 20% des particules réfractaires et des particules oxydables est inférieur à 0,8.

Les caractéristiques et avantages apparaîtront au cours de la description qui va suivre, donnée uniquement à titre d'exemple, faite en se référant au dessin annexé représentant la courbe de répartition granulométrique des particules selon un exemple de réalisation.

Le procédé de formation d'une masse réfractaire sur une surface selon la présente invention consiste à projeter sur ladite surface un mélange de particules réfractaires et de particules oxydables partiellement fondues, dans lequel le facteur de répartition granulométrique f(G) des fractions passantes à 80% (D80) et à 20% (D20) des particules réfractaires et des particules oxydables est inférieur à 0,8, à savoir :

$$f(G) = \frac{2(D80 - D20)}{D80 + D20} < 0,8$$

La fraction passante à 80% (D80) des particules oxydables et des particules réfractaires est inférieure à 2mm, de préférence inférieure à 1,2 mm.

La fraction passante à 20% (D20) des particules oxydables et des particules réfractaires est inférieure à 500 microns.

La fraction passante à 100% des particules oxydables et des particules réfractaires est inférieure à 2,5 mm.

Le mélange de particules est projeté contre la surface, par une lance avec apport d'oxygène. Les particules oxydables brûlent avec dégagement de chaleur en se combinant avec l'oxygène.

Les particules oxydables et les particules réfractaires ont une composition telle qu'en présence de la chaleur de combustion, une masse cohérente réfractaire se forme contre la surface à revêtir.

La présente invention concerne également une composition d'un mélange de particules réfractaires et de particules oxydables dans laquelle le facteur de répartition granulométrique f(G) des fractions passantes à 80% (D80) et 20% (D20) des particules réfractaires et des particules oxydables est inférieur à 0,8.

La fraction passante à 80% (D80) des particules oxydables et des particules réfractaires est inférieure à 2mm, de préférence inférieure à 1,2mm.

La fraction passante à 20% (D20) des particules oxydables et des particules réfractaires est inférieure à 500 microns.

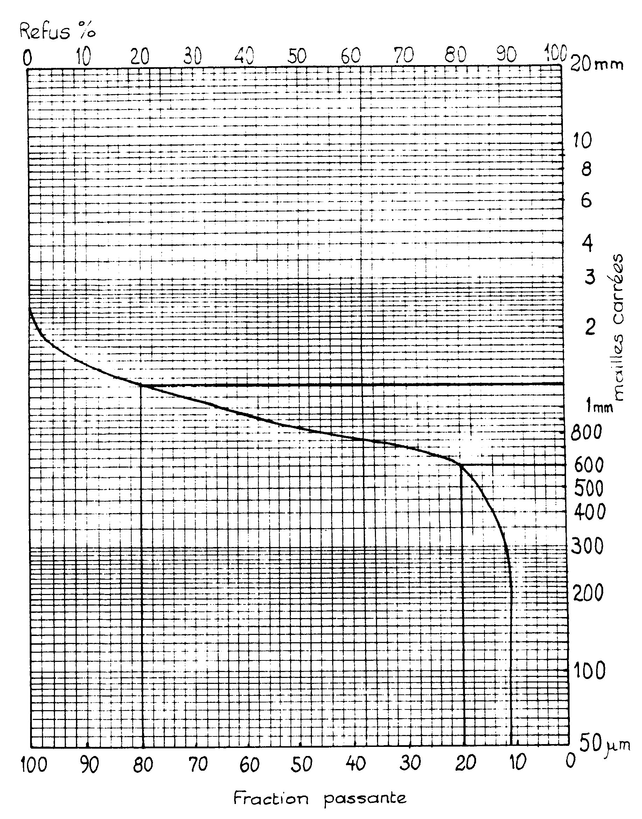

Dans l'exemple de réalisation dont la courbe de répartition granulométrique est représentée sur la Figure 1, la composition utilisée représente 20% de particules oxydables constituées uniquement de silicium métal et les particules réfractaires sont des oxydes de silicium obtenus par concassage de briques déclassées par état de surface.

Le facteur de répartition granulométrique f(G) est égal à 0,66.

Comme on peut le voir sur la courbe de la figure, la fraction passante à 80% (D80) est égale à 1,2mm et la fraction passante à 20% (D20) est égale à 600 microns.

Ainsi, la composition a une répartition telle que l'on a une majorité de grains (60%) dont la taille se situe enre 0,6 et 1,2 mm, quelques grains plus fins (20%) dont la taille est inférieure 0,6 mm et quelques gros grains (20%) dont la taille est supérieure à 1,2 mm, tout en restant inférieure à 2,5 mm.

Avec une telle composition, on crée, au moment de la projection, un brouillard contenant 20% de grains fins qui fondent complètement sous l'action de l'oxygène et qui se soufflent, 20% de gros grains qui ne fondent qu'en surface et 60% de grains idéalement fondus.

Par conséquent, les gros grains entrainent les grains fins et l'énergie dégagée par lesdits grains se transmet aux gros grains au niveau de la surface à revêtir et permet à ceux-ci d'adhérer.

En fait, les grains fins agissent comme un agent collant pour les gros grains.

La masse réfractaire ainsi élaborée est alors très homogène et a une bonne résistance à l'abrasion.

Le rendement du procédé selon la présente invention est de plus de 90%.

**Revendications**

1. Procédé de formation d'une masse réfractaire sur une surface, dans lequel on projette un mélange de particules réfractaires et de particules oxydables partiellement fondues, caractérisé en ce que le facteur de répartition granulométrique des fractions passantes à 80% et à 20% des particules réfractaires et des particules oxydables est inférieur à 0,8.

2. Procédé selon la revendication 1, caractérisé en ce que la fraction passante à 80% des particules oxydables et des particules réfractaires est inférieure à 2mm.

3. Procédé selon la revendication 1, caractérisé en ce que la fraction passante à 80% des particules oxydables eet des particules réfractaires est inférieure à 1,2mm.

4. Procédé selon la revendication 1, caractérisé en ce que la fraction passante à 20% des particules oxydables et des particules réfractaires est inférieure à 500 microns.

5. Procédé selon la revendication 1, caractérisé en ce que la fraction passante à 100% de particules oxydables et des particules réfractaires est inférieure à 2,5 mm.

6. Composition d'un mélange de particules réfractaires et de particules oxydables destiné à être projeté sur une surface pour former une masse réfractaire, caractérisée en ce que le facteur de répartition granulométrique des fractions passantes à 80% et à 20% des particules réfractaires et des particules oxydables est inférieur à 0,8.

7. Composition selon la revendication 6, caractérisée en ce que la fraction passsante à 80% des particules réfractaires et des particules oxydables est inférieure à 2mm.

8. Composition selon la revendication 6, caractérisée en ce que la fraction passante à 80% des particules réfractaires et des particules oxydables est inférieure à 1,2 mm.

9. Composition selon la revendication 6, caractérisée en ce que la fraction passante à 20% des particules réfractaires et des particules oxydables est inférieure à 500 microns.

10. Composition selon la revendication 6, caractérisée en ce que la fraction passante à 100% des particules réfractaires et des particules oxydables est inférieure à 2,5 mm.

**Claims**

1. Method for forming a refractory mass on a surface, in which a mixture of refractory particles and partly melted oxidizable particles is sprayed, characterised in that the particle size distribution factor of the fractions not retained at 80% and at 20% of the refractory particles and oxidizable particles is lower than 0.8.

2. Method according to Claim 1, characterised in that the fraction not retained at 80% of the oxidizable particles and refractory particles is less than 2 mm.

3. Method according to Claim 1, characterised in that the fraction not retained at 80% of the oxidizable particles and refractory particles is less than 1.2 mm.

4. Method according to Claim 1, characterised in that the fraction not retained at 20% of the oxidizable particles and refractory particles is less than 500 microns.

5. Method according to Claim 1, characterised in that the fraction not retained at 100% of oxidizable particles and refractory particles is less than 2.5 mm.

6. Composition of a mixture of refractory particles and oxidizable particles designed to be sprayed onto a surface to form a refractory mass, characterised in that the particle size distribution factor of the fractions not retained at 80% and at 20% of the refractory particles and oxidizable particles is lower than 0.8.

7. Composition according to Claim 6, characterised in that the fraction not retained at 80% of the refractory particles and oxidizable particles is less than 2 mm.

8. Composition according to Claim 6, characterised in that the fraction not retained at 80% of the refractory particles and oxidizable particles is less than 1.2 mm.

9. Composition according to Claim 6, characterised in that the fraction not retained at 20% of the refractory particles and oxidizable particles is less than 500 microns.

10. Composition according to Claim 6, characterised in that the fraction not retained at 100% of the refractory particles and oxidizable particles is less than 2.5 mm.

**Patentansprüche**

1. Verfahren zur Herstellung einer feuerfesten Masse auf einer Flache, in dem ein Gemisch aus feuerfesten Teilchen und oxidierbaren, teilweise geschmolzenen Teilchen aufgebracht wird, dadurch gekennzeichnet, daß der Faktor der Kornverteilung der Kornklasse der feuerfesten Teilchen und der oxidierbaren Teilchen mit einem Durchgang von 80 % und von 20 % unter 0,8 liegt.

2. Verfahren nach Anspruch 1, dadurch gekennzeichnet, daß der Faktor der Kornverteilung der Kornklasse der feuerfesten Teilchen und der oxidierbaren Teilchen mit einem Durchgang von 80 % unter 2 mm liegt.

3. Verfahren nach Anspruch 1, dadurch gekennzeichnet, daß der Faktor der Kornverteilung der Kornklasse der feuerfesten Teilchen und der oxidierbaren Teilchen mit einem Durchgang von 80 % unter 1,2 mm liegt.

4. Verfahren nach Anspruch 1, dadurch gekennzeichnet, daß der Faktor der Kornverteilung der Kornklasse der feuerfesten Teilchen und der oxidierbaren Teilchen mit einem Durchgang von 20 % unter 500 µm liegt.

5. Verfahren nach Anspruch 1, dadurch gekennzeichnet, daß der Faktor der Kornverteilung der Kornklasse der feuerfesten Teilchen und der oxidierbaren Teilchen mit einem Durchgang von 100 % unter 2,5 mm liegt.

6. Zusammensetzung eines Gemischs aus feuerfesten Teilchen und oxidierbaren Teilchen zum Aufbringen auf eine Fläche zur Bildung einer feuerfesten Masse, dadurch gekennzeichnet, daß der Faktor der Kornverteilung der Kornklasse der feuerfesten Teilchen und der oxidierbaren Teilchen mit einem Durchgang von 80 % und von 20 % unter 0,8 liegt.

7. Zusammensetzung nach Anspruch 6, dadurch gekennzeichnet, daß der Faktor der Kornverteilung der Kornklasse der feuerfesten Teilchen und der oxidierbaren Teilchen mit einem Durchgang von 80 % unter 2 mm liegt.

8. Zusammensetzung nach Anspruch 6, dadurch gekennzeichnet, daß der Faktor der Kornverteilung der Kornklasse der feuerfesten Teilchen und der oxidierbaren Teilchen mit einem Durchgang von 80 % unter 1,2 mm liegt.

9. Zusammensetzung nach Anspruch 6, dadurch gekennzeichnet, daß der Faktor der Kornverteilung der Kornklasse der feuerfesten Teilchen und der oxidierbaren Teilchen mit einem Durchgang von 20 % unter 500 µm liegt.

10. Zusammensetzung nach Anspruch 6, dadurch gekennzeichnet, daß der Faktor der Kornverteilung der Kornklasse der feuerfesten Teilchen und der oxidierbaren Teilchen mit einem Durchgang von 100 % unter 2,5 mm liegt.